**Europäisches Patentamt**

**European Patent Office**

**Office européen des brevets**

(11) Numéro de publication: **0 098 674 B1**

(12) **FASCICULE DE BREVET EUROPÉEN**

(45) Date de publication du fascicule du brevet: **25.11.87**

(51) Int. Cl.⁴: **B 01 F 11/02,** B 06 B 1/20, B 01 D 19/00, G 10 K 9/08

(21) Numéro de dépôt: **83201103.5**

(22) Date de dépôt: **13.02.81**

(54) Procédé d'homogénéisation de mélanges liquides.

(30) Priorité: **15.02.80 FR 8003373**

(43) Date de publication de la demande: **18.01.84 Bulletin 84/3**

(45) Mention de la délivrance du brevet: **25.11.87 Bulletin 87/48**

(84) Etats contractants désignés: **BE DE IT LU NL**

(56) Documents cité: **DE-A-914 073 FR-A-1 306 643 LU-A-65 994 US-A-3 765 182**

(73) Titulaire: **SOCIETE D'ETUDES ET DE RECHERCHES DE L'ECOLE NATIONALE SUPERIEURE D'ARTS ET METIERS en abrégé S E R A M, 151, Boulevard de l'Hôpital, F-75013 Paris (FR)**

(72) Inventeur: **Belin, Philippe, 38, rue Ampère, F-75017 Paris (FR)** Inventeur: **Pelletier, Jean-Louis, 12, rue Mayran, F-75009 Paris (FR)**

(74) Mandataire: **Mongrédien, André, c/o BREVATOME 25, rue de Ponthieu, F-75008 Paris (FR)**

EP 0 098 674 B1

## Description

La présente invention concerne un procédé d'homogénéisation de mélanges liquides.

Elle s'applique à l'homogénéisation de mélanges liquides; elle est particulièrement efficace pour l'homogénéisation du lait.

On sait qu'au cours de son mouvement dans un circuit, un liquide est soumis à des variations de pression et que lorsque la pression locale descend au-dessous de la pression de vapeur saturante du liquide, il peut se former des cavités remplies de vapeur, dans ce liquide. Lorsque des bulles de vapeur atteignent des régions de plus forte pression, elles se condensent très brutalement et implosent. C'est le phénomène de cavitation. Ce phénomène apparaît généralement dans les turbines, les pompes centrifuges, les vannes, les robinets, les hélices, etc.... Cette cavitation est très génante puisqu'elle détruit progressivement les dispositifs hydrauliques énumérés ci-dessus. Cette cavitation est généralement précédée par la formation de bulles de gaz ou d'air dissous.

La dissolution et le dégagement de l'air présentent un caractère lent, tandis que la vaporisation et la condensation qui se produisent lors de la cavitation ont un caractère très brutal. Il en résulte que pour éviter les phénomènes de cavitation, on introduit volontairement de l'air dans les circuits des systèmes hydrauliques; cet air sert de coussin absorbant les chocs dus à la condensation des bulles de vapeur, lors de la cavitation. En fait, la cavitation résulte de l'implosion des bulles de vapeur, dans le liquide. Elle provoque une forte érosion dans tous les systèmes hydrauliques, ce qui impose la recherche d'un régime d'emploi optimal, évitant la cavitation des fluides qu'ils contiennent.

Alors que dans tous les systèmes hydrauliques existants, on cherche à éviter la cavitation, l'invention a au contraire pour but de définir un procédé qui permette le dégazage et la mise en cavitation de liquides, de manière que, grâce aux implosions de bulles gazeuses et aux ultrasons qui en résultent, on puisse homogénéiser des mélanges de liquides ou générer des ultrasons pour diverses applications.

L'invention vise donc un procédé d'homogénéisation de mélanges liquides, caractérisé en ce qu'il consiste à dégazer préalablement les liquides mélangés, puis à mettre en cavitation les liquides mélangés en les faisant circuler d'amont en aval d'un diaphragme en provoquant une dépression en aval de ce diaphragme.

Dans une forme de réalisation du procédé de l'invention, on fait passer les liquides mélangés dans une installation comportant successivement d'amont en aval:
- des moyens pour recevoir les liquides en mélange dans un réservoir,
- un conduit de circulation des liquides mélangés, ce conduit contenant un diaphragme présentant un orifice de dimension inférieure à la dimension interne du conduit, et
- des moyens pour provoquer une dépression en aval du diaphragme dans le conduit.

Selon une autre caractéristique, les moyens qui provoquent une dépression en aval du diaphragme, sont constitués par une pompe apte à assurer la circulation des liquides dans le conduit, à travers le diaphragme, en provoquant la dépression en aval du diaphragme.

Selon une autre caractéristique, la pompe est une pompe aspirante associée à des moyens d'entraînement et dont l'aspiration est reliée à l'extrémité du conduit en aval du diaphragme.

Selon une autre caractéristique, la pompe est une pompe centrifuge.

Selon une autre caractéristique, les moyens d'entraînement de la pompe comprennent un moteur associé à des moyens pour régler la vitesse optimale de rotation de la pompe, pour provoquer la cavitation des liquides, dans le conduit, en aval du diaphragme.

Selon une autre caractéristique, les moyens de réglage sont en outre aptes à régler la vitesse de rotation de la pompe, pour provoquer la cavitation du liquide dans la pompe.

Les caractéristiques et avantages de l'invention ressortiront mieux de la description qui va suivre, donnée en référence aux dessins annexés dans lesquels:
- la figure 1 représente schématiquement un mode de réalisation d'une installation pour la mise en oeuvre du procédé de l'invention,
- la figure 2 est un diagramme montrant la pression en aval du diaphragme, en fonction de la vitesse de rotation de la pompe.

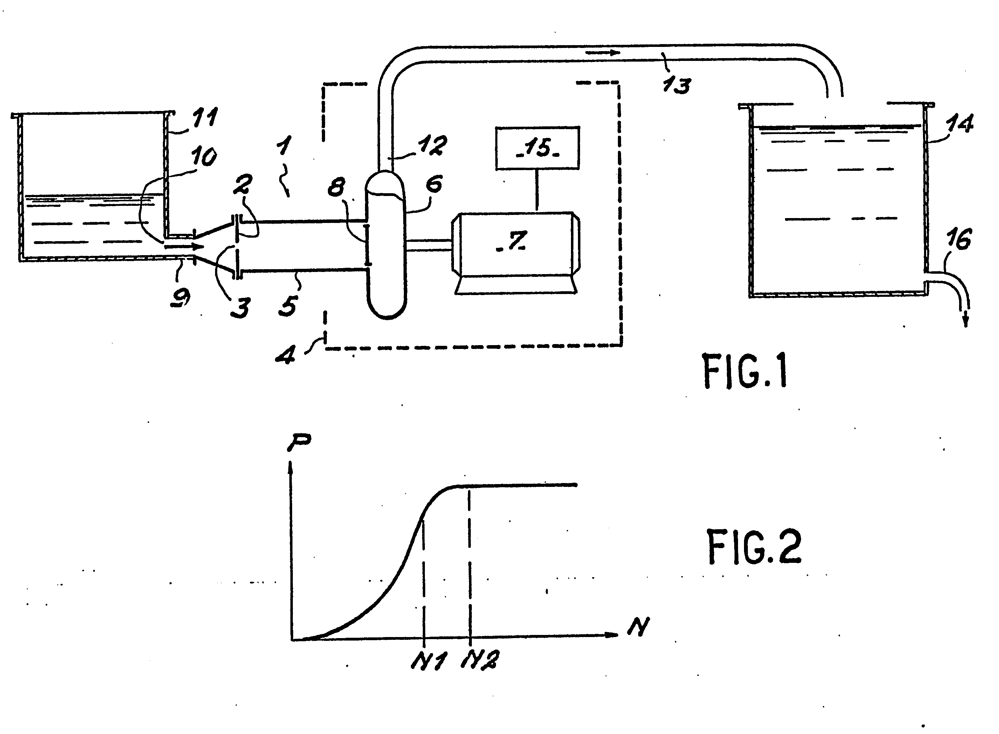

La figure 1 représente une installation qui comprend un conduit 1 de circulation des liquides mélangés dans lequel on veut provoquer une cavitation; un diaphragme 2 est situé dans le conduit et présente un orifice 3 de dimension inférieure à la dimension interne du conduit. Le dispositif comprend en outre des moyens 4, pour provoquer une dépression dans la partie 5 du conduit 1, en aval du diaphragme 2. Les moyens 4 sont constitués par une pompe aspirante qui, dans le mode de réalisation préféré de l'invention, est une pompe centrifuge 6 associée à des moyens d'entraînement, constitués ici par un moteur 7. L'aspiration 8 de la pompe 6 est reliée à l'extrémité du conduit 1, en aval du diaphragme 2. Le conduit 1 est prolongé en amont du diaphragme 2 par une conduite 9, de moindre dimension que celle de la conduite 5, de manière à favoriser la dépression créée par la pompe, en aval du diaphragme. Cette conduite présente une entrée 10 dans un réservoir 11 qui contient des liquides mélangés à homogénéiser. Le refoulement 12 de la pompe 6 est relié par une conduite 13, à un réservoir de sortie 14. Les moyens d'entraînement de la pompe comprennent également des moyens 15 pour régler sa vitesse de rotation, de manière qu'à cette vitesse, il se produise une cavitation des liquides dans le conduit, en aval du diaphragme. Il est également possible, grâce à ces moyens de réglage, de commander la rotation de la pompe de manière à créer une cavitation des liquides dans celle-ci.

L'installation qui vient d'être décrite permet, grâce à la cavitation de liquides, en aval du diaphragme 2 et éventuellement dans la pompe 6, de dégazer les liquides mélangés et de les homogénéiser. Elle s'applique notamment à l'homogénéisation du lait; ce dispositif peut également servir de générateur d'ultrasons puisque la cavitation qui se produit dans le conduit 1, en aval du diaphragme, est accompagnée d'ultrasons qui peuvent trouver des applications particulières. Afin de faciliter la cavitation, il est nécessaire, avant la mise en oeuvre du dispositif pour ses diverses applications, de dégazer le liquide qui est pompé dans le réservoir 11. En effet, les gaz dissous dans le liquide empêchent le phénomène de cavitation de se dérouler dans de bonnes conditions.

La figure 2 est un diagramme qui représente en fonction de la vitesse N de rotation de la pompe, la pression P dans la pompe. On remarquera sur cette figure, que la pression P croît de façon sensiblement constante, en fonction de la vitesse, jusqu'à une vitesse N1 puis qu'elle se stabilise pour une vitesse de rotation N2 de la pompe. C'est entre les vitesses N1 et N2 que le phénomène de cavitation se produit. La pompe utilisée dans le dispositif de l'invention a permis d'atteindre des pressions ponctuelles estimées à 100 000 bars, tandis que le bruit ultrasonore qui accompagne la cavitation, présente une fréquence de 33 kHz au sein d'un spectre très étendu. Cette cavitation dépend essentiellement du débit de la pompe, du diamètre de l'aspiration de celle-ci, de la charge en amont du diaphragme et du rapport $\frac{d}{D}$ (d représentant le diamètre de l'orifice du diaphragme et D le diamètre du tube en aval de ce diaphragme). La cavitation dépend également de la nature des liquides qui traversent le diaphragme et de la teneur des gaz dissous dans ces liquides.

L'invention permet bien d'atteindre les buts mentionnés plus haut et notamment d'homogénéiser des liquides en provoquant une cavitation en aval du diaphragme traversé par ces liquides et éventuellement dans la pompe traversée par ces liquides.

Il est à remarquer que l'on peut associer une pluralité d'installations conformes à l'invention, soit en série, soit en parallèle, soit en série-parallèle.

Il est également à remarquer que l'invention permet l'obtention de liquides dégazés.


## Revendications

1. Procédé d'homogeneisation de mélanges liquides caractérisé en ce qu'il consiste à dégazer préalablement les liquides mélangés, puis à mettre en cavitation les liquides mélangés en les faisant circuler d'amont en aval d'un diaphragme (2), en provoquant une dépression en aval de ce diaphragme.

2. Procédé selon la revendication 1 caractérisé en ce que l'on fair passer les liquides mélangés dans une installation comportant successivement d'amont en aval:
- des moyens (11) pour recevoir les liquides en mélange,
- un conduit (1) de circulation des liquides mélangés, ce conduit contenant un diaphragme (2) présentant un orifice (3) de dimension inférieure à la dimension interne du conduit, et
- des moyens (4) pour provoquer une dépression en aval du diaphragme dans le conduit (1).

3. Procédé selon la revendication 2, caractérisé en ce que les moyens pour provoquer une dépression en aval du diaphragme sont constitués par une pompe (6) apte à assurer la circulation des liquides dans le conduit, à travers le diaphragme (2), en provoquant la dépression en aval (5) du diaphragme (2).

4. Procédé selon la revendication 3, caractérisé en ce que la pompe (6) est une pompe aspirante, associée à des moyens d'entraînement (7) et dont l'aspiration (8) est reliée à l'extrémité du conduit (1) en aval du diaphragme (2).

5. Procédé selon la revendication 4, caractérisé en ce que la pompe (6) est une pompe centrifuge.

6. Procédé selon la revendication 5, caractérisé en ce que les moyens d'entraînement de la pompe comprennent un moteur (7) associé à des moyens (15) pour regler la vitesse optimale de rotation de la pompe, pour provoquer la cavitation des liquides dans le conduit (1), en aval du diaphragme.

7. Procédé selon la revendication 6, caractérisé en ce que les moyens de réglage (15) sont en outre aptes à régler la vitesse de rotation de la pompe pour provoquer la cavitation de liquides dans la pompe.


## Patentansprüche

1. Verfahren zum Homogenisieren von Flüssigkeitsmischungen, dadurch gekennzeichnet, daß es umfaßt: zunächst Entgasen der vermischten Flüssigkeiten, anschließend Versetzen der vermischten Flüssigkeiten in Kavitation, indem man sie von stromaufwärts nach stromabwärts einer Stauscheibe (2) zirkulieren läßt, indem man einen Unterdruck stromabwärts dieser Stauscheibe hervorruft.

2. Verfahren nach Anspruch 1, dadurch gekennzeichnet, daß man die vermischten Flüssigkeiten durch eine Anlage strömen läßt, die von stromaufwärts nach stromabwärts nacheinander enthält:
- eine Einrichtung (11), um die in Mischung befindlichen Flüssigkeiten aufzunehmen,
- eine Leitung (1) zur Zirkulation der vermischten Flüssigkeiten, wobei diese Leitung eine Stauscheibe (2) enthält, die eine Öffnung (3) aufweist, deren Abmessung kleiner als die Innenabmessung der Leitung ist, und

- eine Einrichtung (4), um einen Unterdruck stromabwärts von der Stauscheibe in der Leitung (1) hervorzurufen.

3. Verfahren nach Anspruch 2, <u>dadurch gekennzeichnet</u>, daß die Einrichtung zur Erzeugung eines Unterdrucks stromabwärts der Stauscheibe von einer Pumpe (6) gebildet ist, die dazu eingerichtet ist, die Zirkulation von Flüssigkeiten in der Leitung durch die Stauscheibe (2) sicherzustellen, indem sie den Unterdruck stromabwärts (5) der Stauscheibe (2) hervorruft.

4. Verfahren nach Anspruch 3, <u>dadurch gekennzeichnet</u>, daß die Pumpe (6) eine Saugpumpe ist, die Antriebseinrichtungen (7) zugeordnet ist und deren Ansaugöffnung (8) mit dem Ende der Leitung (1) stromabwärts von der Stauscheibe (2) verbunden ist.

5. Verfahren nach Anspruch 4, <u>dadurch gekennzeichnet</u>, daß die Pumpe (6) eine Kreiselpumpe ist.

6. Verfahren nach Anspruch 5, <u>dadurch gekennzeichnet</u>, daß die Antriebseinrichtungen der Pumpe einen Motor (7) enthalten, der Einrichtungen (15) zum Regeln der optimalen Drehgeschwindigkeit der Pumpe zugeordnet ist, um die Kavitation der Flüssigkeiten in der Leitung (1) stromabwärts der Stauscheibe hervorzurufen.

7. Verfahren nach Anspruch 6, <u>dadurch gekennzeichnet</u>, daß die Regeleinrichtungen (15) darüber hinaus dazu eingerichtet sind, die Drehgeschwindigkeit der Pumpe zu regeln, um die Kavitation von Flüssigkeiten in der Pumpe hervorzurufen.

**Claims**

1. Process for the homogenization of liquid mixtures, characterized in that it consists in degassing the mixed liquids beforehand and then subjecting the mixed liquids to cavitation by circulating them from the upstream side to the downstream side of a diaphragm (2), while producing a partial vacuum downstream of this diaphragm.

2. Process according to Claim 1, characterized in that the mixed liquids are made to flow into a plant comprising in succession, from upstream in a downstream direction:

- means (11) for receiving the liquids as a mixture,
- a conduit (1) for circulating the mixed liquids, this conduit containing a diaphragm (2) having an orifice (3) of a size which is smaller than the internal size of the conduit, and
- means (4) for producing a partial vacuum downstream of the diaphragm in the conduit (1).

3. Process according to Claim 2, characterized in that the means for producing a partial vacuum downstream of the diaphragm consists of a pump (6) capable of ensuring the circulation of the liquids in the conduit, through the diaphragm (2), while producing the partial vacuum downstream (5) of the diaphragm (2).

4. Process according to Claim 3, characterized in that the pump (6) is a suction pump associated with means for driving (7) and whose suction (8) is connected to the end of the conduit (1) downstream of the diaphragm (2).

5. Process according to Claim 4, characterized in that the pump (6) is a centrifugal pump.

6. Process according to Claim 5, characterized in that the means for driving the pump comprise a motor (7) associated with means (15) for regulating the optimum speed of rotation of the pump, to produce cavitation in the liquids in the conduit (1) downstream of the diaphragm.

7. Process according to Claim 6, characterized in that the regulating means (15) are additionally capable of regulating the speeds of rotation of the pump to produce cavitation in liquids in the pump.

FIG.1

FIG.2